Europäisches Patentamt

**European Patent Office**

**Office européen des brevets**

(19)

(11) Veröffentlichungsnummer: **0 175 174**
**B1**

(12) EUROPÄISCHE PATENTSCHRIFT

(45) Veröffentlichungstag der Patentschrift:
08.02.89

(51) Int. Cl.⁴: **G 21 C 7/10**

(21) Anmeldenummer: **85110667.4**

(22) Anmeldetag: **24.08.85**

(54) **Steuerstab für Kernreaktoren.**

(30) Priorität: **03.09.84 SE 8404389**

(43) Veröffentlichungstag der Anmeldung:
**26.03.86 Patentblatt 86/13**

(45) Bekanntmachung des Hinweises auf die Patenterteilung:
**08.02.89 Patentblatt 89/6**

(84) Benannte Vertragsstaaten:
**CH DE IT LI NL**

(56) Entgegenhaltungen:
**FR-A- 1 435 216**
**GB-A- 1 225 947**
**US-A- 2 861 035**
**US-A- 3 448 008**
**US-A- 4 451 428**

(73) Patentinhaber: **AB ASEA-ATOM, S-721 83 Västeras (SE)**

(72) Erfinder: **Ahlinder, Siwe, Löpargatan 98,**
**S-722 41 Västeras (SE)**
Erfinder: **Höök, Sven, Tunbyvägen 42 A,**
**S-722 23 Västeras (SE)**
Erfinder: **Jönsson, Erik, Förvaltargatan 10,**
**S-724 66 Västeras (SE)**
Erfinder: **Morlin, Kjell, Skälbygatan 57, S-724 76 Västeras**
**(SE)**

(74) Vertreter: **Boecker, Joachim, Dr.-Ing.,**
**Rathenauplatz 2-8, D-6000 Frankfurt a.M. 1 (DE)**

**Beschreibung**

Die vorliegende Erfindung betrifft einen Steuerstab für Kernreaktoren gemäss dem Oberbegriff des Anspruches 1. Ein Steuerstab dieser Art ist bekannt aus der US-A-3 448 008.

Gemäss der vorgenannten Druckschrift enthält das Schmalseitenteil eine in der Absorberplatte gelegene nach aussen verschlossene in Längsrichtung der Absorberplatte verlaufende Nut, in welche eine in Längsrichtung der Absorberplatte verlaufende Schiene an den Mündungen der Kanäle im Boden der Nut anliegt.

Wenn Borkarbid einer Bestrahlung ausgesetzt ist, bildet sich Helium. Da eine Absorberplatte in einem Steuerstab nicht an allen Stellen einer gleich starken Bestrahlung ausgesetzt ist, entwickeln sich unterschiedlich grosse Gasmengen in den einzelnen Kanälen mit Absorbermaterial. Bei dem oben genannten Steuerstab erzielt man einen Ausgleich des entstehenden Gasdruckes zwischen den einzelnen Kanälen dadurch, dass die Kanäle, wie bereits erwähnt, mit Hilfe eines schmalen Seitenteils verschlossen sind, welches eine Gasströmung zwischen den einzelnen Kanälen zulässt.

Borkarbid hat die weitere Eigenschaft, dass es bei Bestrahlung aufquillt. Dieses Aufquellen des Absorbermaterials in einem Kanal kann eine Spannungskorrosion in dem Material verursachen, welches das Absorbermaterial umgibt, also in dem Material, aus dem die Steuerstäbe hergestellt sind. Die Gefahr des Auftretens von Rissen in dem Konstruktionsmaterial infolge der Spannungskorrosion ist grösser, je stärker die Bestrahlung und damit das Aufquellen des Absorbermaterials ist. Wenn an einem Kanal ein Riss aufgetreten ist, wird Borkarbid aus diesem Kanal wegtransportiert, so dass der Kanal an Borkarbid verarmt. Ausserdem tritt ein Transport von Absorbermaterial von anderen nahe gelegenen, unbeschädigten Kanälen auf, besonders in dem Bereich, der am dichtesten an dem Schmalseitenteil liegt, da das Schmalseitenteil den Transport von Flüssigkeit aus dem defekten Kanal in einen unbeschädigten Kanal und den Transport von Flüssigkeit zusammen mit Absorbermaterial von einem unbeschädigten Kanal zu dem defekten Kanal und von dort in die Umgebung nicht effektiv verhindert. Die vorgenannten Folgen des Aufquellens des Absorbermaterials führen zu einer Verkürzung der Lebensdauer des Steuerstabes.

Der Erfindung liegt die Aufgabe zugrunde, einen Steuerstab der eingangs genannten Art zu entwickeln, bei welchem der Verkürzung der Lebensdauer des Steuerstabes durch das Aufquellen des Absorbermaterials wirksam entgegengewirkt wird.

Zur Lösung dieser Aufgabe wird ein Steuerstab gemäss dem Oberbegriff des Anspruches 1 vorgeschlagen, welcher erfindungsgemäss die im kennzeichnenden Teil des Anspruches 1 genannten Merkmale hat.

Vorteilhafte Ausgestaltungen der Erfindung sind in den weiteren Ansprüchen genannt.

Die Erfindung beruht also auf der Erkenntnis, dass die Lebensdauer eines Steuerstabes erheblich verlängert werden kann, wenn Massnahmen getroffen werden, die den Folgen des Aufquellens des Absorbermaterials entgegenwirken. Eine Verlängerung der Lebensdauer der Steuerstäbe ist ausserordentlich wichtig. Sie schlägt sich nicht nur in geringeren Kosten für neue Steuerstäbe nieder, sondern auch in geringeren Kosten für die Aufbewahrung und die Endlagerung verbrauchter Steuerstäbe.

Gemäss der Erfindung wird der oben erläuterte Transport von pulverförmigem Absorbermaterial vollständig verhindert oder zumindest wird ihm sehr stark entgegengewirkt. Dies kann gemäss der Erfindung dadurch erreicht werden, dass ein Spalt mit einer im Voraus genau bestimmten Breite ohne Schwierigkeit zwischen dem Kanal und dem Körper aus metallischem Absorbermaterial gebildet werden kann, was ohne Veränderung der äusseren Abmessungen des Steuerstabes und ohne nennenswerte Verminderung der neutronenabsorbierenden Kapazität erreichbar ist. Die Verhinderung eines solchen Transportes nur unter Ausnutzung des Schmalseitenteils würde sehr zeitraubende zusätzliche Arbeitsgänge im Anschluss an die zur Fertigung gehörenden Press- und Schweissvorgänge erfordern und würde wegen der Natur dieser Arbeitsgänge ausserdem zu einem unsicheren Ergebnis führen.

Bei dem pulverförmigen Absorbermaterial haben vorzugsweise mindestens 50% der Körner eine Grösse, die 0,13 mm übersteigt.

Der Spalt zwischen der Innenwand des Kanals und dem Körper aus metallischem Absorbermaterial, also der Abstand zwischen der Innenwand des Kanals und der Oberfläche des genannten Körpers senkrecht zur Längsrichtung des Kanals, beträgt vorzugsweise 0,01–0,13 mm. Wenn der Kanal und der Körper einen Kreisquerschnitt haben, hat der Körper einen Durchmesser, der vorzugsweise 0,01–0,13 mm kleiner als der Durchmesser des Kanals ist. Die Länge des Körpers beträgt vorzugsweise 5–25 mm.

Anhand der in den Figuren gezeigten Ausführungsbeispiele soll die Erfindung näher erläutert werden. Es zeigen

Figur 1 eine Seitenansicht eines Steuerstabes teilweise im Schnitt in Längsrichtung der Absorberplatten,

Figur 2 einen Schnitt durch den Steuerstab gemäss Figur 1 längs der Linie A–A,

Figur 3 einen zur Zentrumsachse des Steuerstabes parallelen Querschnitt einer Absorberplatte nahe der von der Zentrumachse des Steuerstabes abgewandten Schmalseite des Steuerstabes,

Figur 4 und 5 in vergrösserter Darstellung Schnitte längs der Linien B–B beziehungsweise C–C in Figur 3.

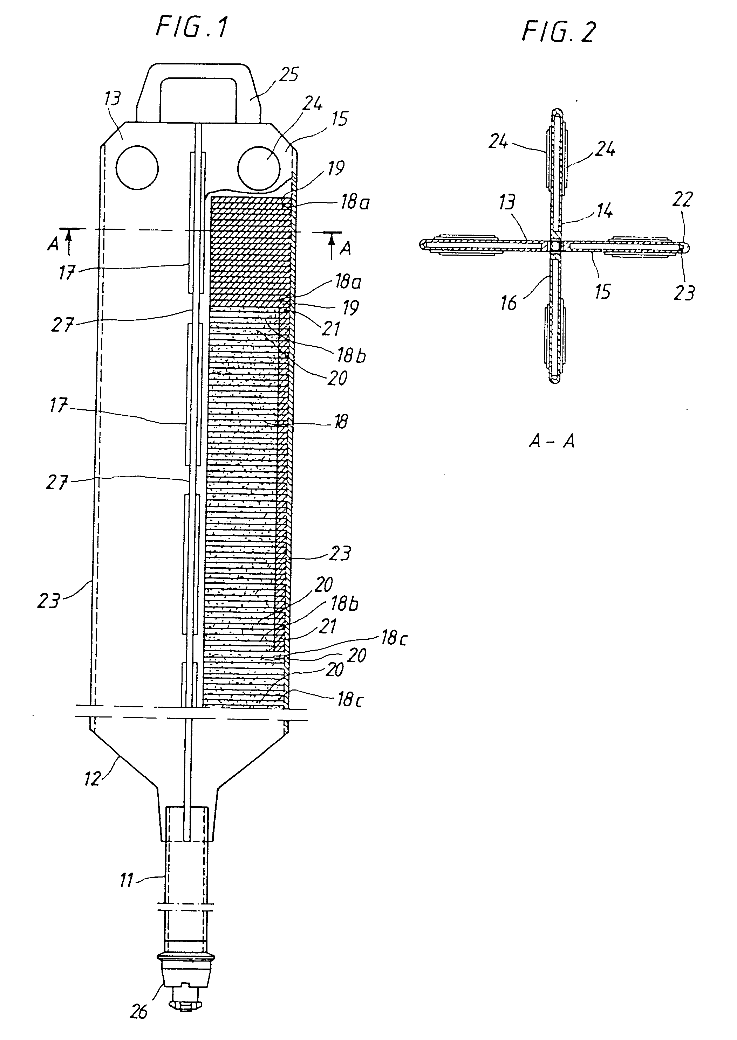

Der in den Figuren 1 und 2 dargestellte Steuerstab ist im wesentlichen aus rostfreiem Stahl hergestellt und besteht aus einem von einer vertikal angeordneten Kupplungsstange 11 getragenen Absorberteil 12. Der Absorberteil besteht aus vier langgestreckten Absorberplatten 13–16, welche ein rechtwinkliges Kreuz bilden, dessen zentrale Achse mit der der Kupplungsstange zusammenfällt. Die Absorberplatten sind in der Mitte des Steuerstabes mit Aussparungen 17 und Verbindungsteilen 27 versehen und an den Verbindungsteilen miteinander und an einem an den Verbindungsteilen angeordneten stützenden Keil mit quadratischem Querschnitt zusammengeschweisst. Die Absorberplatten, die eine Dicke von 8 mm haben, sind mit einer grossen Anzahl gebohrter Kanäle 18 (18a–18c) mit einem Durchmesser von 6 mm und einer Tiefe von 100 mm versehen. Der Abstand zwischen den Mantelflächen zweier benachbarter Löcher beträgt 2 mm.

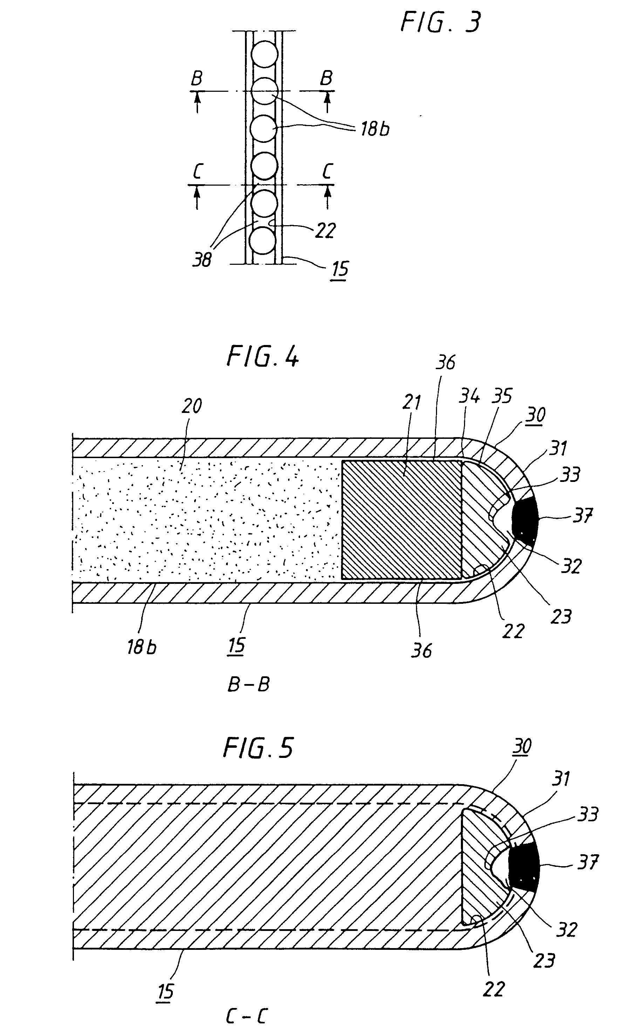

Die im oberen Bereich gelegenen Kanäle 18a, die am stärksten der Strahlung ausgesetzt sind, sind mit Stäben aus Hafnium gefüllt, welche dieselbe Länge wie die Kanäle haben. Hafnium quillt bei Bestrahlung nicht. Die darunterliegenden Kanäle 18b sind mit pulverförmigem Borkarbid gefüllt mit Ausnahme in dem vom Zentrum des Stabes am weitesten entfernten Bereich, der mit einem kreiszylindrischen Körper 21 aus Hafnium gefüllt ist. Das Borkarbid besteht mindestens zu 50% aus Körnern mit einer über 0,13 mm liegenden Korngrösse. Der Körper 21 hat eine Länge von 15 mm und einen Durchmesser, der 0,06 mm kleiner als der Durchmesser des Kanals ist. Die im unteren Bereich, wo die Strahlung am geringsten ist, angeordneten Kanäle 18c sind vollständig mit pulverförmigem Borkarbid 20 der vorgenannten Art gefüllt. Die von der zentralen Achse des Steuerstabes abgewandte schmale Seite jeder Absorberplatte ist mit einer Nut 22 versehen, in der eine Schiene 23 angeordnet ist. Zumindest ihr oberer Teil besteht zweckmässigerweise aus Hafnium. Die Schiene kann auch vollständig oder zumindest in ihrem unteren Teil beispielsweise aus rostfreiem Stahl bestehen. Die Anbringung der Schiene in der Nut und das Verschliessen der Nut werden weiter unten ausführlich nach Erläuterung der Figuren 3 bis 5 beschrieben. Zur Führung des Steuerstabes in den verhältnismässig schmalen Spalten zwischen den Brennelementkästen des Reaktors ist der Steuerstab oben mit einem Führungskissen 24 aus Inconel versehen. Ausserdem ist der Steuerstab mit einem Traggriff 25 zum Heben und Senken des Stabes beim Einsetzen und Austauschen versehen. An seinem unteren Ende trägt der Stab einen Kupplungskopf 26, über welchen er mit einem Antriebsmechanismus des Reaktors verbunden werden kann.

Figur 3 zeigt mehrere der genannten Kanäle 18b in der Absorberplatte 15 sowie die Nut 22, die bei dem gezeigten Ausführungsbeispiel über ihre gesamte Länge eine Breite von 5,5 mm hat. Wie aus den Figuren 4 und 5 näher hervorgeht, hat die Absorberplatte einen an einer Schmalseite liegenden Teil 30, der aus einer gasdichten Seitenwand 31, einem vor dieser liegenden in Längsrichtung verlaufenden Raum 32 und einer in der Nut 22 angeordnete in Längsrichtung verlaufende Schiene 23 besteht, welche dieselbe Breite wie die Nut hat und eine in Längsrichtung verlaufende Vertiefung 33 aufweist, deren Oberfläche eine Begrenzungswand für den Raum 32 bildet. Die Schiene bedeckt die Mündungen 34 der Kanäle im Boden der Nut nicht vollständig, da ihre Breite kleiner als der Durchmesser der Kanäle ist. Der letztere beträgt – wie bereits erwähnt – im gezeigten Ausführungsbeispiel 6 mm. Hierdurch wird dort, wo die Kanäle liegen, ein Spalt 35 zwischen der Schiene und den Seitenwänden der Nut gebildet, während in den Bereichen 38 (Figur 3), wo keine Kanäle liegen und die Seitenwände der Nut daher dicker sind, die Seitenwände der Nut an der Schiene anliegen, und somit kein Spalt gebildet wird. Sowohl die Kanäle 18b wie auch die Kanäle 18a und 18c stehen über die Spalte 35 mit dem Raum 32 in offener Verbindung, so dass durch die Bestrahlung des pulverförmigen Absorbermaterials gebildetes Gas von einem Kanal in die anderen übertreten kann, wodurch ein Druckausgleich in den Kanälen erreicht wird. Der Spalt 36 zwischen dem Körper 21 aus Hafnium und der Innenwand des Kanals 18b gestattet das Strömen von Gas, behindert jedoch oder verhindert vollständig den Abtransport von Absorbermaterial aus dem Kanal. Dadurch wird der Transport von Absorbermaterial aus einem unbeschädigten Kanal über einen Kanal, der einen Riss hat, in die Umgebung des Steuerstabes verhindert oder zumindest stark herabsetzt. Der Spalt 36, also der Abstand zwischen der Innenwand des Kanals 18b und der Oberfläche des Körpers 21, ist somit schmaler als der Spalt 35, also der Abstand zwischen der Innenseite der schmalen Seitenwand 31 und der Oberfläche der Schiene 23 seitlich des Raumes 32, und ausserdem länger. Der Spalt 36 ist auch schmaler als die in dem Seitenwandbereich vorhandenen Strömungswege für das Gas.

Zur Herstellung der Absorberplatte werden die Kanäle 18 von der langen schmalen Seite einer planparallelen Platte in die Platte gebohrt. Danach wird die Nut 22 gefräst. Nach dem Füllen der Kanäle mit Absorbermaterial wird die Schiene 23 in der Nut angebracht, und die zunächst geraden Seitenwände der Nut werden gegen die Schiene gebogen und mit ihren Endflächen unter Bildung einer gasdichten schmalen Seitenwand 31 zusammengeschweisst. Die Schweissnaht ist mit 37 bezeichnet. Die Nut ist auch an ihren in Längsrichtung gelegenen Enden, am oberen und unteren Ende der Absorberplatte, durch Schweissnähte verschlossen.

Die Erfindung wurde anhand eines Ausführungsbeispiels beschrieben, bei dem Borkarbid als pulverförmiges Absorbermaterial und Hafnium als metallisches Absorbermaterial verwendet werden. Die Erfindung ist jedoch auch bei Verwendung anderer bekannter pulverförmiger Absorbermaterialien, wie zum Beispiel Europium in Form von Oxyd oder einer anderen Verbindung und anderen bekannten metallischen Absorbermaterialien, wie Silber-Indium-Kadmiumlegierung (80% Ag, 15% In, 5% Cd) und rostfreiem Borstahl geeignet.

## Patentansprüche

1. Steuerstab für Kernreaktoren mit einer Anzahl langgestreckter Absorberplatten (13–16), von denen jede mit mehreren Kanälen (18) versehen ist, die sich im wesentlichen senkrecht zur Längsrichtung der Absorberplatte erstrecken, pulverförmiges Borkarbid oder anderes pulverförmiges, bei Bestrahlung gasabgebendes und aufquellendes Absorbermaterial (20) enthalten und von der Umgebung des Steuerstabes hermetisch durch ein seitliches Teil (30) getrennt sind, welches längs der äusseren langen schmalen Seitenwand (31) der Absorberplatte angeordnet ist und eine gasdichte Seitenwand (31) und einen auf der Innenseite dieser Seitenwand (31) angeordneten, in Längsrichtung der Absorberplatte verlaufenden Raum (32) umfasst, welcher Raum (32) in offener Verbindung mit den einzelnen Kanälen in der Absorberplatte steht und eine Gasströmung zwischen den Kanälen ermöglicht, dadurch gekennzeichnet, dass zwischen dem pulverförmigen Absorbermaterial und dem seitlichen Teil (30) in einem Teil der Kanäle (18b) ein aus Hafnium oder anderem metallischen Absorbermaterial bestehender Körper (21) angeordnet ist, der so bemessen ist, dass zwischen ihm und der Innenwand des Kanals ein Spalt (36) gebildet wird, der eine Gasströmung zulässt, aber kleiner ist als zumindest der Hauptteil der Körner des pulverförmigen Absorbermaterials.

2. Steuerstab nach Anspruch 1, dadurch gekennzeichnet, dass die Kanäle (18b) und der Körper (21) aus metallischem Absorbermaterial einen kreisförmigen Querschnitt haben.

3. Steuerstab nach Anspruch 2, dadurch gekennzeichnet, dass der Körper (21) aus metallischem Absorbermaterial eine kreiszylindrische Form hat.

4. Steuerstab nach einem der vorhergehenden Ansprüche, dadurch gekennzeichnet, dass das seitliche Teil (30) eine nach aussen geschlossene Nut (22) in der Absorberplatte enthält und dass die Mündungen der Kanäle (18b) im Boden der Nut liegen.

5. Steuerstab nach Anspruch 4, dadurch gekennzeichnet, dass eine längsgehende Schiene (23) in der Nut zwischen dem längsgehenden Raum (32) und den Kanälen (18b) derart angeordnet ist, dass sie die Mündung der Kanäle in der Nut nicht vollständig abdeckt.

6. Steuerstab nach Anspruch 5, dadurch gekennzeichnet, dass die Schiene (23) zumindest über einen Teil ihrer Länge aus Hafnium oder einem anderen metallischen Absorbermaterial besteht.

7. Steuerstab nach einem der vorhergehenden Ansprüche 1 bis 6, dadurch gekennzeichnet, dass die in Längsrichtung der Absorberplatte verlaufende Seitenwand (31) eine – von der Mitte des Stabes aus gesehen – nach aussen gerichtete schmale Wand der Absorberplatte ist.

## Claims

1. Control rod for nuclear reactors with a number of elongated absorber plates (13–16) each being provided with a plurality of channels (18) extending substantially perpendicular to the longitudinal direction of the absorber plate, the channels containing powdered boron carbide or other powdered absorber material (20) which gives off gas and swells upon irradiation and which is hermetically separated from the surroundings of the control rod by a lateral portion (30) arranged along the outer edge (31) of the absorber plate and comprising a gas-tight side wall (31) and a space (32) formed on the inner side of said wall (31) and extending in the longitudinal direction of the absorber plate, said space (32) openly communicating with the different channels in the absorber plate and allowing a gas flow between the channels, characterized in that a body (21) of hafnium or another metallic absorber material is arranged, in a plurality of channels (18b), between the powdered absorber material and the lateral portion (30), said body (21) being dimensioned such that a gap (36) is formed between said body (21) and the inner wall of the channel, which gap permits the flow of gas but is narrower than at least the main part of the grains in the powdered absorber material.

2. Control rod according to claim 1, characterized in that the channels (18b) and the body (21) of metallic absorber material have a circular cross-section.

3. Control rod according to claim 2, characterized in that the body (21) of metallic absorber material has a circular-cylindrical shape.

4. Control rod according to any of claims 1 to 3, characterized in that the lateral portion (30) comprises an outwardly sealed slot (22) in the absorber plate and that the orifices of the channels (18b) are located at the bottom of the slot.

5. Control rod according to claim 4, characterized in that the longitudinally extending bar (23) in the slot between said longitudinally extending space (32) and said channels (18b) is arranged such as to not entirely covering the orifices of the channels in the slot.

6. Control rod according to claim 5, characterized in that the bar (23) consists, at least along part of its lenght, of hafnium or another metallic absorber material.

7. Control rod according to any of claims 1 to 6, characterized in that the side wall (31), which extends in the longitudinal direction of the absorber plate, is formed, contemplated from the centre of the rod, by the outwardly facing edge of the absorber plate.

## Revendications

1. Barre de commande de réacteur nucléaire ayant un certain nombre de plaques d'absorbant (13 à 16) oblongues, chacune d'entre elles étant munie de plusieurs canaux (18) qui s'étendent sensiblement perpendiculairement à la direction longitudinale de la plaque d'absorbant, contenant du carbure de bore pulvérulent ou un autre matériau absorbant (20) pulvérulent libérant du gaz lors de l'irradiation et gonflant, et étant séparées hermétiquement de tout ce qui est autour de la barre de commande par une partie latérale (30) qui est disposée le long de la grande paroi latérale (31) extérieure étroite de la plaque d'absorbant, et qui comprend une paroi latérale (31) étanche au gaz et une chambre (32) qui est disposée du côté intérieur de cette paroi latérale (31) qui s'étend dans la direction longitudinale de la plaque d'absorbant, qui communique avec les canaux individuels de la plaque d'absorbant et qui permet à du gaz de s'écouler entre les canaux, caractérisée en ce qu'entre le matériau absorbant pulvérulent et la partie latérale (30) est montée, dans une partie des canaux (18b), une pièce (21) en hafnium ou en un autre matériau métallique, absorbant de dimensions telles qu'il se forme entre elle et la paroi intérieure du canal un intervalle (36) qui autorise un écoulement de gaz, mais qui est inférieur au moins à la plus grande partie des grains du matériau absorbant pulvérulent.

2. Barre de commande suivant la revendication 1, caractérisée en ce que les canaux (18b) et la pièce (21) en matériau métallique absorbant ont une section transversale circulaire.

3. Barre de commande suivant la revendication 2, caractérisée en ce que la pièce (21) en matériau métallique absorbant est en forme de cylindre circulaire.

4. Barre de commande suivant l'une des revendications précédentes, caractérisée en ce que la partie latérale (30) comporte une gorge (22) fermée vers l'extérieur et ménagée dans la plaque d'absorbant, et en ce que les embouchures des canaux (18b) sont situées au fond de la gorge.

5. Barre de commande suivant la revendication 4, caractérisée en ce qu'une barre longitudinale (23) est montée dans la gorge entre la chambre longitudinale (32) et les canaux (18b), de façon à ne pas recouvrir entièrement l'embouchure des canaux dans la gorge.

6. Barre de commande suivant la revendication 5, caractérisée en ce que la barre (23) est, au moins sur une partie de sa longueur, en hafnium ou en un autre matériau métallique absorbant.

7. Barre de commande suivant l'une des revendications précédentes 1 à 6, caractérisée en ce que la paroi latérale (31) s'étendant dans la direction longitudinale de la plaque d'absorbant est une paroi étroite de la plaque d'absorbant, qui est, considérée à partir du milieu de la barre, tournée vers l'extérieur.

# FIG.1

# FIG.2

A – A

7

FIG. 3

FIG. 4

B-B

FIG. 5

C-C